# FASCICULE DE BREVET EUROPEEN

(11) **EP 1 388 478 B1**
(45) Date de publication et mention de la délivrance du brevet: **25.05.2005**
(21) Numéro de dépôt: 03018215.8
(22) Date de dépôt: 11.08.2003
(51) Int. Cl.: B60T 13/567

(54) **Servomoteur d'assistance pneumatique au freinage et système comportant un maître-cylindre solidarisé à un tel servomoteur**
Pneumatischer Bremskraftverstärker und System, das einen Hauptzylinder enthält, der mit einem solchen Verstärker verbunden ist
Pneumatic brake servo and system including a master cylinder connected to such a servo

(30) Priorité: 09.08.2002 FR 0210597
(43) Date de publication de la demande: 11.02.2004
(73) Titulaire: ROBERT BOSCH GmbH, 70442 Stuttgart (DE)
(72) Inventeur: Richard, Philippe, 77500 Chelles (FR); Maligne, Jean-Charles, 93300 Aubervilliers (FR); Verbo, Ulysse, 93600 Aulnay-Sous-Bois (FR); Hellebrandt, Michael, 78150 Le Chesnay (FR); Batista, Silverio, 93130 Noisy Le Sec (FR)
(74) Mandataire: Hurwic, Aleksander Wiktor

(56) Documents cités:
- EP-A- 0 328 759
- DE-A- 3 915 732
- GB-A- 2 108 610
- US-B1- 6 314 865

## Description

La présente invention se rapporte principalement à un servomoteur d'assistance pneumatique au freinage et à un système comportant un maître-cylindre solidarisé à un tel servomoteur.

Un premier type de servomoteur d'assistance pneumatique au freinage connu comporte une enveloppe muni d'une première et d'une seconde coquilles serties l'une à l'autre de manière étanche par leur extrémité radialement externes. Les coquilles sont réalisées en tôle d'acier emboutis.

De plus le servomoteur est associé à un maître-cylindre montée fixe par rapport au servomoteur au moyens d'une bride venue de matière avec le corps du maître-cylindre.

De manière connue, la bride du maître-cylindre est pincé entre une face extérieur de l'enveloppe du servomoteur et un écrou vissé sur une extrémité filetée en saillie de l'enveloppe du servomoteur.

Cependant comme il est souhaitable de solidariser le maître-cylindre et le servomoteur avant montage dans le compartiment moteur, il faut que cette étape supplémentaire soit rapide et simple.

De plus, afin d'assurer une rigidité suffisante de l'enveloppe qui est soumis à de fortes contraintes du fait des fortes variations de pression, l'épaisseur de la tôle est relativement épaisse et augmente le poids du servomoteur. Or les constructeurs automobiles cherchent à réduire le poids de chacun des composants d'un véhicule automobile afin par exemple de réduire la consommation de celui-ci.

Pour remédier à ce problème, il est connu un deuxième type de servomoteurs munis de renforts reliant selon l'axe du servomoteur la première à la seconde coquilles afin de permettre de réduire l'épaisseur de la tôle employée pour la fabrication des coquilles tout en conservant la rigidité de l'enveloppe du servomoteur classique.

Cependant les tirants actuels sont complexes à mettre en place et augmentent par conséquent le temps de montage du servomoteur et par la même le prix de revient de celui-ci. Et le gain de poids obtenu reste à améliorer.
Les tirants permettent également de fixer le servomoteur à la paroi dite tablier, séparant le compartiment moteur du compartiment passager. Une première extrémité longitudinale filetée du tirant traverse le tablier par un orifice prévu dans celui-ci et est solidarisé à celui-ci par un écrou monté par le compartiment passager. Le tirant permet également de solidariser le maître-cylindre au servomoteur au moyen d'un écrou vissé sur le tirant.

De plus lors d'une intervention sur le circuit de freinage, il peut être nécessaire de remplacer le maître-cylindre. Or le mode de fixation actuel oblige à séparer également le servomoteur du tablier.

Le brevet US 5,410,880 prévoit un servomoteur à tirant, muni d'une premier manchon solitaire de la coquille du servomoteur orienté du côté du montage du maître-cylindre, le manchon étant muni sur sa périphérie extérieure d'un filetage coopérant avec un écrou venant pincé la bride du maître-cylindre contre ladite coquille du servomoteur.
Le tirant étant monté dans le manchon Ainsi pour séparer le maître-cylindre du servomoteur il suffit de dévisser l'écrou et il n'est pas nécessaire d'enlever le tirant et donc de désolidariser le servomoteur du tablier.

Cependant cette solution est coûteuse du fait de la nécessité de solidariser de manière étanche un premier manchon à une coquille du servomoteur. De plus le manchon et l'écrou sont tout deux en acier afin de supporter les contraintes de traction appliqué par la bride du maître-cylindre. Par conséquent le gain de poids reste modeste. De plus la fixation du maître-cylindre au servomoteur avant le montage dans le compartiment moteur s'effectue par un système vis-écrou long à mettre en oeuvre.

Le brevet US 6,314,865 B1 décrit un servomoteur selon le préambule de la revendication 1.

C'est par conséquent un but de la présente invention d'offrir des moyens pour solidariser un servomoteur à un maître-cylindre de manière simple et rapide.

C'est également un but de la présente invention d'offrir un servomoteur de poids réduit.

C'est également un but de la présente invention d'offrir un servomoteur muni de tirants de conception simple et de montage simplifié.

C'est également un but de la présente invention d'offrir des moyens pour solidariser un servomoteur à un maître-cylindre permettant une séparation du maître-cylindre du servomoteur sans avoir à désolidariser le servomoteur du tablier d'un véhicule automobile.

Ces buts sont atteints par un servomoteur muni d'une première et d'une seconde coquilles, ladite première coquille étant muni de moyens d'encliquetage solidarisant une bride d'un maître-cylindre au servomoteur.

Dans le cas d'un servomoteur muni de moyens pour rigidifier l'enveloppe du servomoteur reliées selon l'axe du servomoteur comportant au moins deux tirants, lesdits moyens d'encliquetage sont portés par les moyens pour rigidifier l'enveloppe du servomoteur.

En d'autres termes une extrémité du moyen pour rigidifier l'enveloppe, comporte au moins un élément élastique de manière radiale, s'effaçant lors du passage dans un orifice de la bride et reprenant sa position initiale pour former butée d'arrêt au moins provisoire pour la bride.

La présente invention a pour avantage de fournir un nombre de pièces réduit, et par conséquent un prix de revient faible.

La présente invention a également pour avantage de ne pas nécessiter d'outils spéciaux pour solidariser le maître cylindre au servomoteur.

La présente invention a principalement pour objet un servomoteur d'assistance pneumatique au freinage comportant une enveloppe d'axe longitudinal, formée par une première et une seconde coquilles, et définissant un volume intérieur divisé par une jupe mobile en une première chambre à basse pression et en une seconde chambre à pression variable, une valve trois voies actionnée par une tige de commande et mettant en communication la chambre avant et la chambre arrière au repos et lors d'une phase de freinage interrompant la communication entre la chambre avant et la chambre arrière et alimentant la chambre arrière en fluide pneumatique à haute pression, ledit servomoteur comportant également au moins un moyen pour solidariser un maître-cylindre audit servomoteur, avantageusement deux moyens pour solidariser un maître-cylindre audit servomoteur caractérisé en ce que lesdits moyens permettent l'accrochage par encliquetage du maître-cylindre au servomoteur.

La présente invention a également pour objet un servomoteur caractérisé en ce que lesdits moyens comportent des pattes solidaires d'un second manchon solidaire du servomoteur et s'étendant de manière radiale vers l'extérieur dudit second manchon.

La présente invention a également pour objet un servomoteur caractérisé en ce que les dites pattes sont déformables plastiquement de manière radiale pour pénétrer dans un passage pratiqué dans une bride du maître-cylindre lors de l'opération d'accrochage du maître-cylindre sur le servomoteur et pour reprendre leur position initiale lorsque que l'opération d'accrochage est terminée.

La présente invention a également pour objet un servomoteur caractérisé en ce que lesdites pattes sont réparties régulièrement de manière angulaire, avantageusement au nombre de deux diamétralement opposées.

La présente invention a également pour objet un servomoteur caractérisé en ce qu'il comportent au moins un second manchon solidaire de la première coquille de l'enveloppe du servomoteur.

La présente invention a également pour objet un servomoteur caractérisé en ce que le second manchon est monté solidaire d'un élément d'entretoise disposé entre la première et la seconde coquilles du servomoteur et d'axe longitudinal parallèle à l'axe du servomoteur.

La présente invention a également pour objet un servomoteur caractérisé en ce que l'élément d'entretoise dans lequel est monté le second manchon par l'intermédiaire d'un orifice pratiqué dans la première coquille, est de forme tubulaire.

La présente invention a également pour objet un servomoteur caractérisé en ce que l'élément d'entretoise comporte des éléments annulaires, à une première et à une seconde extrémités longitudinales en appui contre les faces intérieures, des première et des seconde coquilles.

La présente invention a également pour objet un servomoteur caractérisé en ce que lesdits éléments annulaires, sont des collerettes rapportées aux première et seconde extrémités, de l'élément d'entretoise.

La présente invention a également pour objet un servomoteur caractérisé en ce que le servomoteur comporte un moyen d'indexation angulaire du servomoteur par rapport à un tablier d'un véhicule automobile solidaire de la seconde coquille du servomoteur.

La présente invention a également pour objet un servomoteur caractérisé en ce que les moyens d'indexation angulaire sont formés par une extrémité longitudinale d'un premier manchon en saillie de la seconde coquille vers l'extérieur de l'enveloppe du servomoteur.

La présente invention a également pour objet un servomoteur caractérisé en ce que le premier manchon est solidaire de l'élément d'entretoise.

La présente invention a également pour objet un servomoteur caractérisé en ce que les premier et second manchons, sont montés à force dans l'élément d'entretoise.

La présente invention a également pour objet un servomoteur caractérisé en ce que les premier et second manchons comportent des rainures longitudinales, en saillie sur leur périphérie extérieure coopérant à force avec la surface intérieure de l'élément d'entretoise tubulaire.

La présente invention a également pour objet un servomoteur caractérisé en ce que le premier et le second manchons sont réalisés en thermoplastique.

La présente invention a également pour objet un servomoteur caractérisé en ce que les premier et second manchons, comportent des moyens isolant de manière étanche l'intérieur du servomoteur de l'environnement extérieur.

La présente invention a également pour objet un servomoteur caractérisé en ce que les moyens d'étanchéités sont réalisés en thermoplastique élastomère.

La présente invention a également pour objet un système de freinage comportant un maître-cylindre muni d'une bride percée de passages diamétralement opposés et d'un servomoteur pneumatique au freinage caractérisé en ce que ledit servomoteur est un servomoteur selon la présente invention et en ce que les passages pratiqués dans la bride coopérant avec les moyens d'accrochage par encliquetage permettent l'encliquetage du maître-cylindre sur le servomoteur.

La présente invention a également pour objet un système de freinage caractérisé en ce qu'il est solidarisé à un tablier d'un véhicule automobile au moyen de tirants monté dans les premier et second manchons, et l'élément d'entretoise de manière à être débouchant de part et d'autre du servomoteur selon l'axe longitudinal.

La présente invention a également pour objet un système caractérisé en ce que le tirant comporte à une première et une seconde extrémité longitudinales un premier et un second filetages coopérant avec un premier et un second écrous, ledit premier écrou permettant la fixation du servomoteur au tablier et le second écrou rigidifiant l'enveloppe du servomoteur et confirmant la fixation du maître-cylindre au servomoteur.

La présente invention a également pour objet un système caractérisé en ce que le second écrou comporte des moyens de rupture des pattes du moyen d'accrochage par encliquetage lors du serrage du second écrou sur le tirant.

La présente invention a également pour objet un système caractérisé en ce que les moyens de rupture comportent au moins une rampe pratiquée sur une face de l'écrou en contact avec la bride du maître-cylindre et orientée de manière à ce que la profondeur de ladite rampe diminue lors du serrage du second écrou.

La présente invention sera mieux comprise à l'aide de la description qui va suivre et des figures en annexe sur lesquelles l'avant et l'arrière correspondent respectivement à la gauche te à la droite des dessins, et pour lesquelles :
- La figure 1 est une vue en coupe partielle d'un système servomoteur et maître-cylindre selon la présente invention lors d'une premier étape de montage ;
- La figure 2 est une vue en coupe partielle d'un servomoteur selon la présente invention ;
- La figure 3 est une vue en coupe partielle du système de la figure 1 lors d'une deuxième étape de montage ;
- La figure 4 est une vue de détail de la figure 3, en l'absence d'un écrou et du maître-cylindre ;
- La figure 5 est une vue d'un détail de la figure 3.
- La figure 6 est une vue agrandie de la figure 5

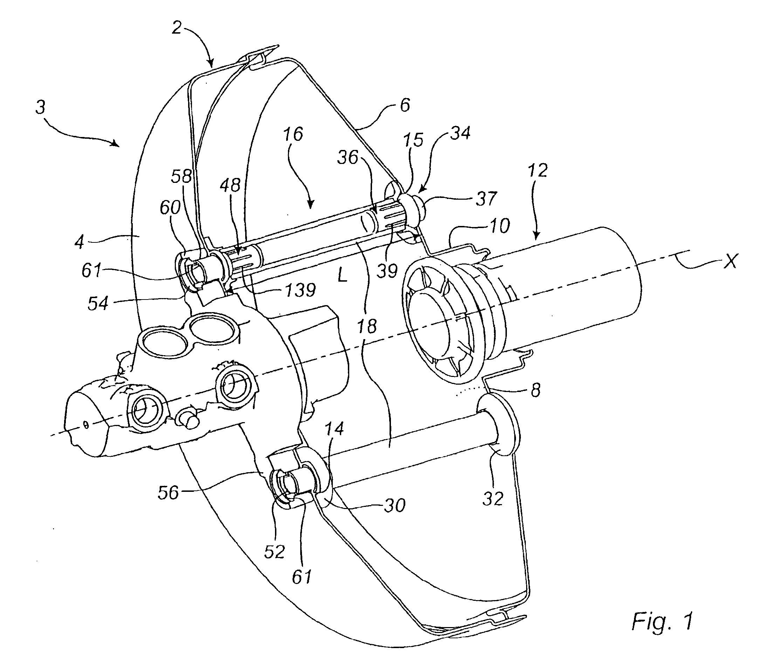

Sur la figure 1, on peut voir un servomoteur 3 selon la présente invention comportant une enveloppe 2 d'axe longitudinal X formé par une première et une seconde coquilles 4,6 raccordées l'une à l'autre par leur extrémité radialement externe par exemple par sertissage.
L'enveloppe 2 définit un volume intérieur divisé par une jupe (non représenté) montée à coulissement étanche, en une chambre à basse pression et une chambre à pression variable.

La première coquille 4 ou coquille avant comporte un orifice de passage d'une tige de poussée non représentée transmettant l'assistance au freinage fournie par le servomoteur à un maître-cylindre et au moins un orifice 14 avantageusement deux orifices dans lesquels sont montées des moyens 16 permettant de rigidifier de l'enveloppe

La seconde coquille 6 ou coquille arrière est en appui par une face extérieure 8 contre un tablier (non représenté) lors de son montage dans le compartiment moteur d'un véhicule automobile et comporte une cheminée 10 s'étendant axialement vers l'arrière. Une valve trois voies 12 actionnée par une tige de commande (non représentée) déplaçable par exemple par une pédale de frein est disposée dans la cheminée 10.
La seconde coquille comporte également deux orifices 15 de passages des moyens pour rigidifier 16
Le fonctionnement de la valve trois voies ainsi que du servomoteur est connu, ainsi nous ne les décrirons pas plus en détail.

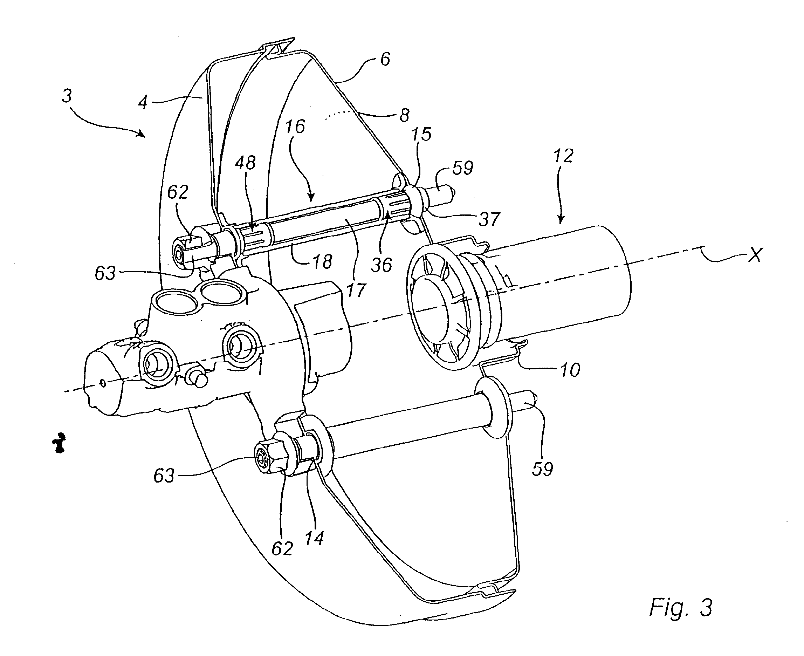

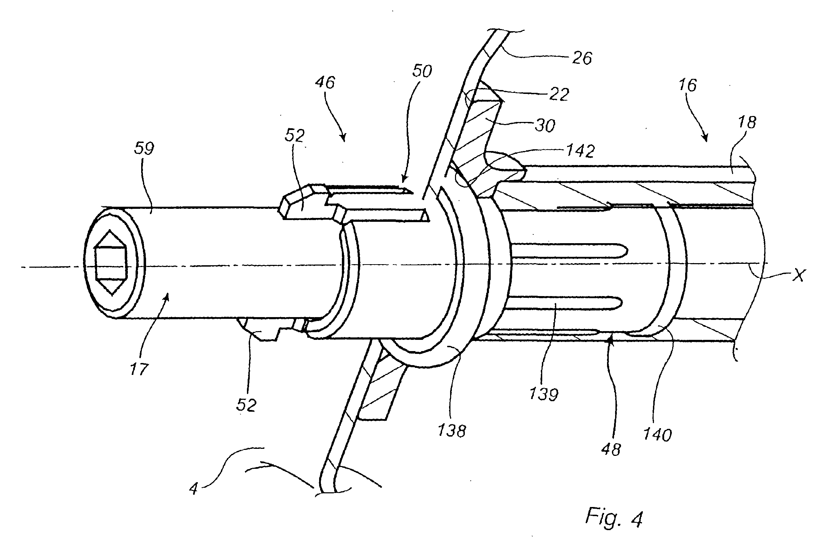

Le moyen pour rigidifier 16 comporte un tirant 17 en forme de tige (figures 3 et 4) et un élément d'entretoise 18 dans lequel est monté le tirant 17, le tirant 17 et l'élément d'entretoise 18 d'axe tous deux d'axe parallèle à l'axe longitudinal X.

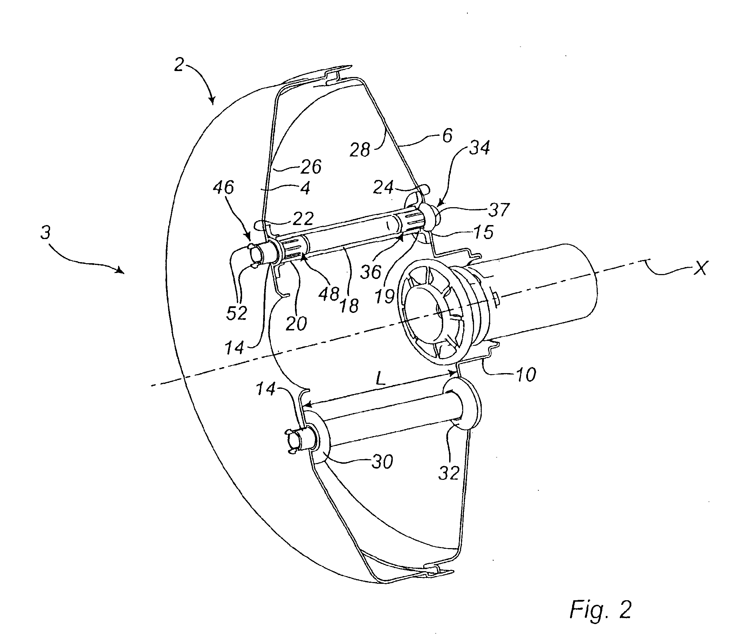

Sur la figure 2, on peut voir l'élément d'entretoise 18 d'axe parallèle à l'axe X de forme tubulaire comportant à une première extrémité longitudinale 20 et à une seconde extrémité 19 longitudinale opposée à la première extrémité respectivement une première et une second surfaces d'appui 22, 24 coopérant avec les faces intérieures 26,28 des première et seconde coquilles 4,6.

Le surfaces d'appui sont avantageusement portés par des collerettes 30,32 par exemple montées à force sur le la périphérie extérieure du tube 18 de manière à fixer un écartement L déterminé entre la première et la seconde coquilles 4,6.

On peut prévoir également de fixer les collerettes par soudure ou collage.

Cependant il n'est pas nécessaire de les fixer au tube 18, il est suffisant de simplement prévoir de maintenir en position les collerettes lors du montage

Il est bien entendu que l'on peut prévoir de réaliser un tube muni d'une collerette venue de matière avec le tube, et une seconde collerette montée après le montage de la jupe du servomoteur.

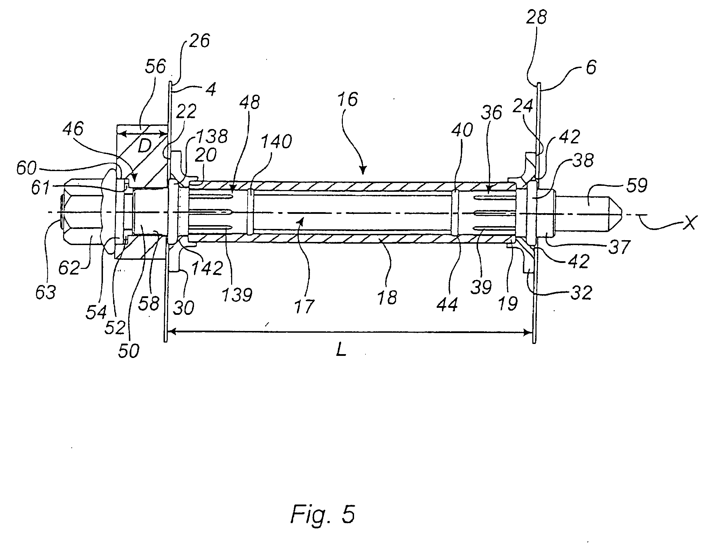

Sur la figure 5, on peut voir également le moyen pour rigidifier 16 comportant au niveau de la seconde extrémité 19 du tube 18 un moyen 34 d'indexation angulaire du servomoteur par rapport au tablier formé par un manchon 36 monté dans le tube 18 de manière fixe, par exemple par emmanchement à force et muni d'une extrémité axiale 37 venant en saillie dans un orifice du tablier (non représenté) prévu pour le passage du tirant. Le diamètre extérieur de l'extrémité axiale 37 est sensiblement égal au diamètre intérieur de l'orifice pratiqué dans le tablier de manière à fixer la position du servomoteur par rapport au tablier.

Le manchon 36 comporte avantageusement sur sa surface extérieure des rainures 39 longitudinales en saillie coopérant à force avec la surface intérieure du tube 18.

Le manchon 36 est par exemple réalisé en matière plastique, par exemple en thermoplastique.

L'espace intérieur du servomoteur est isolé de l'environnement extérieur par des premier et second moyens d'étanchéité 38,40.

Le premier moyen d'étanchéité 38 est monté autour du manchon 36 en appui contre la face intérieure 28 de la coquille arrière 6 et permet d'obturer de manière étanche l'orifice 15. La collerette 32 comporte avantageusement un chanfrein 42 ménageant avec la face intérieure 28 de la coquille 6 un logement pour le joint d'étanchéité 38.

Le joint 38 est avantageusement réalisé en thermoplastique élastomère par moulage sur le manchon 36 en thermoplastique ce qui permet de n'avoir qu'une seule pièce à manipuler au lieu de deux.

Cependant il est envisageable d'utiliser par exemple un joint torique pour le moyen d'étanchéité 38.

Le second moyen d'étanchéité 40 permet d'obturer de manière étanche le passage existant entre la périphérie extérieure du tirant 17 et la périphérie intérieure du manchon 36.

Le second moyen d'étanchéité 40 est disposé dans l'exemple représenté à une extrémité longitudinale 44 du manchon 36 disposée dans l'élément d'entretoise 18.

On pourrait également prévoir le second moyen 40 à l'intérieur du manchon.

Le joint 40 est avantageusement réalisé en thermoplastique élastomère par moulage sur le manchon 36 en thermoplastique ce qui permet de n'avoir qu'une seule pièce à manipuler au lieu de deux.

Par conséquent dans l'exemple représenté, on disposé d'un sous ensemble en une seule partie formé par le manchon 36 et les deux joints d'étanchéité 38,40 solidaires du manchon 36 facilitant le montage du servomoteur.

On peut également prévoir de réaliser le moyen d'étanchéité 40 par exemple par un joint torique classique.

Le moyen pour rigidifier 16 comporte également au niveau de la première extrémité 20 du tube 18 un moyen d'accrochage 46 par encliquetage d'un maître-cylindre au servomoteur.

Le moyen d'accrochage 46 comporte un second manchon 48 solidaire du tube 18 et munie à une extrémité longitudinale 50 débouchant du tube 18 d'éléments 52 élastiques s'étendant de manière radiale vers l'extérieur du manchon et formant une butée pour une bride de maître-cylindre (figure 4).

L'extension longitudinale D de l'extrémité 50 du second manchon 48 est suffisante pour permettre aux éléments 52 de déboucher hors de la bride.

Dans l'exemple représenté, les éléments 52 sont formés par des pattes réparties angulairement, avantageusement de manière régulière. Les pattes 52 sont dans l'exemple représenté au nombre de deux, diamétralement opposées. Les pattes 52 sont rétractables de manière radiale vers l'intérieur de manière élastique afin de s'effacer pour pénétrer dans un passage 54 prévue dans la bride 56 du maître-cylindre et de reprendre leur position initiale lorsque les pattes débouchent hors du passage 54.

La bride comporte avantageusement deux passages 54 associés à chaque moyen (46) d'accrochage du maître-cylindre au servomoteur.

Dans l'exemple représenté, le passage 54 pratiqué dans la bride 56 comporte une première partie de plus petit diamètre 58 et une seconde partie de plus grand diamètre 60 orienté en direction du corps du maître-cylindre, la seconde partie 60 étant raccordée à la première partie 58 par un portée annulaire 61 formant surface d'appui pour les pattes 52 après encliquetage de la bride 56 sur le servomoteur.

Dans l'exemple représenté, le second manchon 48 comporte des troisième 138 et quatrième moyens 140 d'étanchéité analogues aux premier et second moyens 38,40.

La collerette 30 comportant également un chanfrein 142 ménageant un logement pour le troisième moyen d'étanchéité 138.

Le second manchon 48 comporte également avantageusement des rainures 139 longitudinales en saillie coopérant à force avec la surface intérieure du tube 18.

Cependant on pourrait prévoir des joints toriques ou un joint torique et un joint en thermoplastique élastomère venue de matière avec le manchon.

Le tirant 17 en forme sensiblement de tige comporte un première extrémité longitudinale 59 pénétrant dans le compartiment passager du véhicule automobile par un orifice (non représenté) pratiqué dans le tablier, la première extrémité 59 comporte un filetage coopérant avec un premier écrou lors du montage afin de solidariser le système servomoteur-maître-cylindre au tablier.

Le tirant 17 comporte une seconde extrémité longitudinale 63 opposée à la première extrémité 59 également muni d'un filetage coopérant avec un second écrou 62 permettant d'une part de rigidifier l'enveloppe du servomoteur en déterminant l'extension axiale de celle-ci et d'autre part de confirmer l'accrochage du maître-cylindre au servomoteur.

La seconde extrémité 63 du tirant 17 comporte dans l'exemple représenté un tête creuse.à six pants pour permettre le vissage de la première extrémité 59 du tirant 17 dans le compartiment passager.

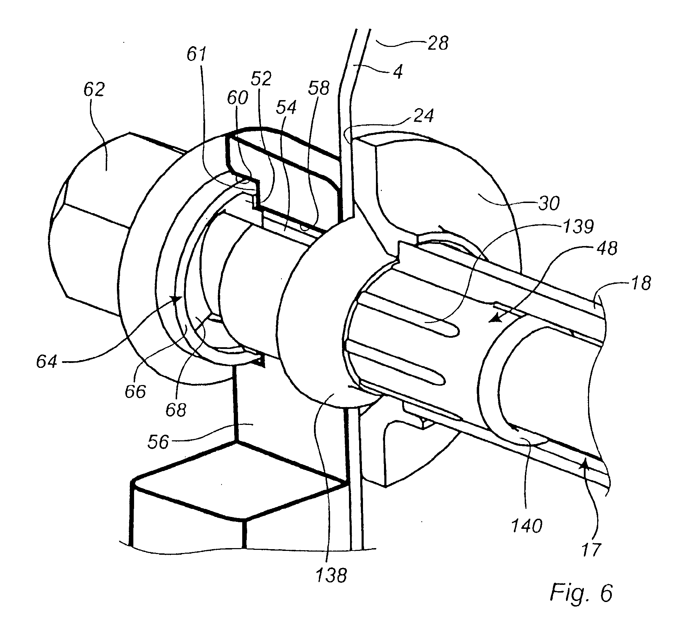

Dans l'exemple représenté et de manière préféré, le second écrou 62 comporte des moyens 64 (figure 6) pour rompre les pattes 52 lors du serrage dudit écrou 62 permettant ainsi en cas de nécessité de séparer le maître-cylindre du servomoteur de n'avoir qu'à enlever le second écrou 62 et sans avoir à employer d'outils spéciaux pour rompre les pattes afin de libérer la bride du maître-cylindre.

Les moyens 64 sont formés par au moins une rampe 68, avantageusement une rampe associées à chaque patte 52. Lesdites rampes 68 sont pratiquées dans une face longitudinale 66 de l'écrou orientée vers la bride. Les rampes 68 sont orientées de manière à ce que lors du vissage de l'écrou sur le tirant, les pattes 52 soient rompues du fait du mouvement de rotation autour de l'axe du tirant du fait du serrage. En d'autres termes, la profondeur de ladite rampe 68 diminue dans le sens du serrage du second écrou 62 obligeant la patte 52 associée à se rompre.

Les moyens de rupture 64 permettent avantageusement de ne pas nécessiter d'orientation du second écrou lors du serrage de celui-ci sur le tirant 17.

On pourrait envisager de réaliser les moyens de rupture 64 par des encoches de forme complémentaires à celles des pattes 52, cependant cela nécessiterait une orientation du second écrou 62 lors du montage de celui-ci sur le tirant 17.

On peut cependant prévoir de ne rompre les pattes 52 que lors du démontage du maître-cylindre à l'aide d'un outil approprié.

Dans l'exemple représenté, l'écrou 62 est rapporté sur le tirant lors du montage du système servomoteur-maître-cylindre dans le véhicule. Cependant il serait envisageable de prévoir un écrou solidaire du tirant 17.

Nous allons maintenant décrire les différentes étapes de montage du système maître-cylindre-servomoteur.

L'équipementier automobile fabrique d'une part le servomoteur muni de l'élément d'entretoise 18, des premier et second manchons 36,48 et des premier, second, troisième et quatrième moyens d'étanchéité 38,40,138,140 et d'autre part le maître-cylindre.

Ensuite il assemble le servomoteur et le maître-cylindre par encliquetage de la bride du maître-cylindre sur les moyens d'accrochage par encliquetage 46 par rapprochement longitudinale du maître-cylindre et du servomoteur. Il peut alors fournir au constructeur automobile un système maître-cylindre-servomoteur facilement manipulable sans risque de perte d'un élément du système, et prêt au montage sur le tablier.

Le constructeur automobile doit solidariser le système servomoteur-maître-cylindre au tablier du véhicule.

Le constructeur place le système servomoteur - maître-cylindre par rapport au tablier grâce au moyen d'indexation angulaire 34, insère le tirant 17 dans les manchons 36,48 et le tube 18.

Le tirant est alors solidariser au tablier à l'aide du premier écrou vissé sur la première extrémité 59 et le deuxième écrou 62 est vissé sur la seconde extrémité 63 du tirant afin de rigidifier l'enveloppe du servomoteur, confirmant la fixation du maître-cylindre au servomoteur. Lors du vissage de l'écrou 62, les pattes 52 sont rompues.

Pour le démontage du maître-cylindre, il suffit de desserrer le second écrou 62, le maître-cylindre pouvant alors être enlever sans avoir à séparer le servomoteur du tablier du véhicule.

L'exemple de réalisation décrit ci-dessus est celui d'un servomoteur muni de moyens pour rigidifier l'enveloppe et portant des moyens d'accrochage par encliquetage du maître-cylindre au servomoteur, mais il est cependant bien entendu qu'un servomoteur muni des moyens d'accrochage par encliquetage portés directement par l'enveloppe du servomoteur ne sort par du cadre de la présente invention.

On a bien réaliser un servomoteur permettant un accrochage rapide et sûr du maître-cylindre pour la manutention et le montage du système servomoteur-maître-cylindre sur le tablier.

On a également réaliser un accrochage compacte et de faible prix de revient du maître-cylindre au servomoteur permettant de libérer le maître-cylindre sans détacher le servomoteur du tablier du véhicule, le maître-cylindre pouvant être libérer sans utilisation d'outils spéciaux.

La présente invention s'applique notamment à l'industrie automobile.

La présente invention s'applique principalement à l'industrie du freinage pour véhicule automobile, en particulier pour voiture particulière.

## Revendications

1. Servomoteur d'assistance pneumatique au freinage comportant une enveloppe (2) d'axe longitudinal (X), formée par une première (4) et une seconde coquilles (6), et définissant un volume intérieur divisé par une jupe mobile en une première chambre à basse pression et en une seconde chambre à pression variable, une valve trois voies (12) actionnée par une tige de commande et mettant en communication la chambre avant et la chambre arrière au repos et lors d'une phase de freinage interrompant la communication entre la chambre avant et la chambre arrière et alimentant la chambre arrière en fluide pneumatique à haute pression, ledit servomoteur comportant également au moins un moyen (46) pour solidariser un maître-cylindre audit servomoteur, avantageusement deux moyens pour solidariser un maître-cylindre audit servomoteur **caractérisé en ce que** lesdits moyens (46) permettent l'accrochage par encliquetage du maître-cylindre au servomoteur.

2. Servomoteur selon 1a revendication 1 **caractérisé en ce que** lesdits moyens (46) comportent des pattes (52) solidaires d'un second manchon (48) solidaire du servomoteur et s'étendant de manière radiale vers l'extérieur dudit second manchon (48).

3. Servomoteur selon la revendication précédente **caractérisé en ce que** les dites pattes (52) sont déformables plastiquement de manière radiale pour pénétrer dans un passage (54) pratiqué dans une bride (56) du maître-cylindre lors de l'opération d'accrochage du maître-cylindre sur le servomoteur et pour reprendre le position initiale lorsque que l'opération d'accrochage est terminée.

4. Servomoteur selon la revendication 2 ou 3 **caractérisé en ce que** lesdites pattes sont réparties régulièrement de manière angulaire, avantageusement au nombre de deux diamétralement opposées.

5. Servomoteur selon l'une quelconque des revendications de 2 à 4 **caractérisé en ce qu'**il comportent au moins un second manchons(48) solidaire de la première coquille (4) de l'enveloppe (2) du servomoteur.

6. Servomoteur selon la revendication 5 **caractérisé en ce que** le second manchon est monté solidaire d'un élément d'entretoise (18) disposé entre la première (4) et la seconde (6) coquilles du servomoteur et d'axe longitudinal parallèle à l'axe (X) du servomoteur.

7. Servomoteur selon la revendication précédente **caractérisé en ce que** l'élément d'entretoise (18) dans lequel est monté le second manchon (48) par l'intermédiaire d'un orifice (14) pratiqué dans la première coquille (4), est de forme tubulaire.

8. Servomoteur selon la revendication précédente **caractérisé en ce que** l'élément d'entretoise (18) comporte des éléments annulaires (30,32) à une première (20) et à une seconde (19) extrémités longitudinales en appui contre les faces intérieures (26,28) des première et des seconde coquilles (4,6).

9. Servomoteur selon la revendication précédente **caractérisé en ce que** lesdits éléments annulaires (30,32) sont des collerettes rapportées aux première et seconde extrémités (20,19) de l'élément d'entretoise (18).

10. Servomoteur selon l'une quelconque des revendications précédentes **caractérisé en ce que** le servomoteur comporte un moyen d'indexation angulaire (34) du servomoteur par rapport à un tablier d'un véhicule automobile solidaire de la seconde coquille (6) du servomoteur.

11. Servomoteur selon la revendication précédente **caractérisé en ce que** les moyens d'indexation angulaire (34) sont formé par une extrémité longitudinale d'un premier manchon (36) en saillie de la seconde coquille (6) vers l'extérieur de l'enveloppe (2) du servomoteur.

12. Servomoteur selon la revendication précédente en combinaison avec l'une quelconque des revendications de 6 à 9 **caractérisé en ce que** le premier manchon (36) est solidaire de l'élément d'entretoise (18).

13. Servomoteur selon la revendication 12 **caractérisé en ce que** les premier et second manchons (36,48) sont montés à force dans l'élément d'entretoise (18).

14. Servomoteur selon la revendication précédente **caractérisé en ce que** les premier (36) et second manchons (48) comportent des rainures longitudinales (39,139) en saillie sur leur périphérie extérieure coopérant à force avec la surface intérieure de l'élément d'entretoise (18) tubulaire.

15. Servomoteur selon l'une quelconque des revendications 11 à 14 **caractérisé en ce que** le premier (36) et le second manchons (38) sont réalisés en thermoplastique.

16. Servomoteur selon l'une quelconque des revendications 11 à 14 **caractérisé en ce que** les premier et second manchons (36,48) comportent des moyens (38,40,138,140) isolant de manière étanche l'intérieur du servomoteur de l'environnement extérieur.

17. Servomoteur selon la revendication précédente en combinaison avec la revendication 15 **caractérisé en ce que** les moyens d'étanchéités (38,40,138,140) sont réalisés en thermoplastique élastomère.

18. Système de freinage comportant un maître-cylindre muni d'une bride (56) percée de passages (54) diamétralement opposés et d'un servomoteur pneumatique au freinage **caractérisé en ce que** ledit servomoteur est un servomoteur selon l'une quelconque des revendications précédentes et **en ce que** les passages (54) pratiqués dans la bride coopérant avec les moyens d'accrochage par encliquetage (46) permettent l'encliquetage du maître-cylindre sur le servomoteur.

19. Système de freinage selon la revendication précédente **caractérisé en ce qu'**il est solidarisé à un tablier d'un véhicule automobile au moyen de tirants (17) monté dans les premier et second manchons (36,48) et l'élément d'entretoise (18) de manière à être débouchant de part et d'autre du sérvomoteur selon l'axe longitudinal (X).

20. Système selon la revendication précédente **caractérisé en ce que** le tirant (17) comporte à une première et une seconde extrémité longitudinales un premier et un second filetages coopérant avec un premier et un second (62) écrous, ledit premier écrou permettant la fixation du servomoteur au tablier et le second écrou rigidifiant l'enveloppe (2) du servomoteur et confirmant la fixation du maître-cylindre au servomoteur.

21. Système selon la revendication précédente **caractérisé en ce que** le second écrou (62) comporte des moyens (64) de rupture des pattes (52) du moyen d'accrochage par encliquetage lors du serrage du second écrou (62) sur le tirant (17).

22. Système selon la revendication 21 **caractérisé en ce que** les moyens de rupture (64) comportent au moins une rampe (68) pratiquée sur une face de l'écrou en contact avec la bride du maître-cylindre et orientée de manière à ce que la profondeur de ladite rampe (68) diminue lors du serrage du second écrou (62).

## Patentansprüche

1. Pneumatischer Servomotor zur Bremsunterstützung, enthaltend ein Gehäuse (2) mit Längsachse (X), das aus einer ersten (4) und einer zweiten Schale (6) gebildet ist und ein Innenvolumen definiert, das durch eine bewegliche Schürze in eine erste Kammer mit Niederdruck und eine zweite Kammer mit variablem Druck geteilt ist, wobei ein Dreiwegeventil (12), das von einer Steuerstange betätigt wird, in der Ruhephase die vordere Kammer und die hintere Kammer miteinander verbindet, bei einer Bremsphase die Verbindung zwischen der vorderen Kammer und der hinteren Kammer unterbricht und die hintere Kammer mit pneumatischem Hochdruckfluid versorgt, wobei der Servomotor ebenfalls mindestens ein Mittel (46) aufweist, um einen Hauptzylinder fest mit dem Servomotor zu verbinden, vorteilhafterweise zwei Mittel, um einen Hauptzylinder fest mit dem Servomotor zu verbinden, **dadurch gekennzeichnet, dass** die Mittel (46) das Einhaken des Hauptzylinders an den Servomotor durch Einrasten ermöglichen.

2. Servomotor nach Anspruch 1, **dadurch gekennzeichnet, dass** die Mittel (46) Laschen (52) aufweisen, die fest mit einer zweiten, fest mit dem Servomotor verbundenen Hülse (48) verbunden sind und sich radial nach außerhalb der zweiten Hülse (48) erstrecken.

3. Servomotor nach dem vorhergehenden Anspruch, **dadurch gekennzeichnet, dass** die Laschen (52) plastisch radial verformbar sind, um beim Vorgang des Einhakens des Hauptzylinders an den Servomotor in einen Durchgang (54) zu dringen, der in einem Flansch (56) des Hauptzylinders ausgebildet ist, und um die ursprüngliche Position erneut einzunehmen, wenn der Einhakvorgang beendet ist.

4. Servomotor nach Anspruch 2 oder 3, **dadurch gekennzeichnet, dass** die Laschen regelmäßig winkelmäßig verteilt sind, wobei vorteilhafterweise jeweils zwei Laschen diametral einander gegenüberliegen.

5. Servomotor nach einem der Ansprüche 2 bis 4, **dadurch gekennzeichnet, dass** er mindestens eine zweite Hülse (48) aufweist, die fest mit der ersten Schale (4) des Gehäuses (2) des Servomotors verbunden ist.

6. Servomotor nach Anspruch 5, **dadurch gekennzeichnet, dass** die zweite Hülse fest an einem Querstrebeelement (18) angebracht ist, das zwischen der ersten (4) und der zweiten Schale (6) des Servomotors angeordnet ist und dessen Längsachse parallel zur Achse (X) des Servomotors ist.

7. Servomotor nach dem vorhergehenden Anspruch, **dadurch gekennzeichnet, dass** das Querstrebeelement (18), in dem die zweite Hülse (48) mittels einer in der ersten Schale (4) ausgebildeten Öffnung (14) angebracht ist, röhrenförmig ist.

8. Servomotor nach dem vorhergehenden Anspruch, **dadurch gekennzeichnet, dass** das Querstrebeelement (18) an einem ersten (20) und einem zweiten Längsende (19) ringförmige Elemente (30, 32) aufweist, die sich gegen die Innenflächen (26, 28) der ersten und zweiten Schale (4, 6) stützen.

9. Servomotor nach dem vorhergehenden Anspruch, **dadurch gekennzeichnet, dass** die ringförmigen Elemente (30, 32) Kragen sind, die an dem ersten und zweiten Ende (20, 19) des Querstrebeelements (18) angesetzt sind.

10. Servomotor nach einem der vorhergehenden Ansprüche, **dadurch gekennzeichnet, dass** der Servomotor ein Mittel (34) zur Positionierung des Servomotors in eine Winkelposition bezüglich einer Kraftfahrzeugzwischenwand aufweist, welche fest mit der zweiten Schale (6) des Servomotors verbunden ist.

11. Servomotor nach dem vorhergehenden Anspruch, **dadurch gekennzeichnet, dass** die Mittel (34) zur Positionierung in eine Winkelposition durch ein Längsende einer ersten Hülse (36) gebildet sind, das von der zweiten Schale (6) nach außerhalb des Gehäuses (2) des Servomotors hervorsteht.

12. Servomotor nach dem vorhergehenden Anspruch in Kombination mit einem der Ansprüche 6 bis 9, **dadurch gekennzeichnet, dass** die erste Hülse (36) fest mit dem Querstrebeelement (18) verbunden ist.

13. Servomotor nach Anspruch 12, **dadurch gekennzeichnet, dass** die erste und zweite Hülse (36, 48) mit Kraft in dem Querstrebeelement (18) angebracht sind.

14. Servomotor nach dem vorhergehenden Anspruch, **dadurch gekennzeichnet, dass** die erste (36) und zweite Hülse (48) an ihrem Außenumfang hervorstehende Längsrillen (39, 139) aufweisen, die kraftschlüssig mit der Innenfläche des röhrenförmigen Querstrebeelements (18) zusammenwirken.

15. Servomotor nach einem der Ansprüche 11 bis 14, **dadurch gekennzeichnet, dass** die erste (36) und zweite Hülse (48) aus Thermoplast hergestellt sind.

16. Servomotor nach einem der Ansprüche 11 bis 14, **dadurch gekennzeichnet, dass** die erste und zweite Hülse (36, 48) Mittel (38, 40, 138, 140) aufweisen, die in dichter Weise den Innenraum des Servomotors von der Außenumgebung isolieren.

17. Servomotor nach dem vorhergehenden Anspruch in Kombination mit Anspruch 15, **dadurch gekennzeichnet, dass** die Dichtmittel (38, 40, 138, 140) aus thermoplastischem Elastomer hergestellt sind.

18. Bremssystem mit einem Hauptzylinder, der mit einem Flansch (56), der mit diametral einander gegenüberliegenden Durchgängen (54) durchsetzt ist, und mit einem pneumatischen Servomotor zum Bremsen versehen ist, **dadurch gekennzeichnet, dass** der Servomotor ein Servomotor nach einem der vorhergehenden Ansprüche ist und dass die in dem Flansch ausgebildeten Durchgänge (54), die mit den Einhakmitteln (46) durch Einrasten zusammenwirken, das Einrasten des Hauptzylinders an den Servomotor ermöglichen.

19. Bremssystem nach dem vorhergehenden Anspruch, **dadurch gekennzeichnet, dass** er durch Zugbolzen (17) fest mit einer Kraftfahrzeugzwischenwand verbunden ist, wobei die Zugbolzen in der ersten und zweiten Hülse (36, 48) und in dem Querstrebeelement (18) so angebracht sind, dass sie auf der einen und anderen Seite des Servomotors entlang der Längsachse (X) ausmünden.

20. System nach dem vorhergehenden Anspruch, **dadurch gekennzeichnet, dass** der Zugbolzen (17) an einem ersten und zweiten Längsende ein erstes und zweites Außengewinde aufweist, die mit einer ersten und zweiten Schraubenmutter (62) zusammenwirken, wobei die erste Schraubenmutter die Befestigung des Servomotors an der Zwischenwand ermöglicht und die zweite Schraubenmutter das Gehäuse (2) des Servomotors versteift und die Befestigung des Hauptzylinders an den Servomotors verstärkt.

21. System nach dem vorhergehenden Anspruch, **dadurch gekennzeichnet, dass** die zweite Schraubenmuter (62) Mittel (64) aufweist, welche die Laschen (52) des Einhakmittels durch Einrasten zerbrechen, wenn die zweite Schraubenmutter (62) am Zugbolzen (17) festgezogen wird.

22. System nach Anspruch 21, **dadurch gekennzeichnet, dass** die Mittel zum Zerbrechen (64) mindestens eine Rampe (68) aufweisen, die an einer mit dem Flansch des Hauptzylinders verbundenen Fläche der Schraubenmutter ausgebildet und so orientiert ist, dass sich die Tiefe der Rampe (68) beim Festziehen der zweiten Schraubenmutter (62) verringert.

## Claims

1. Pneumatic brake booster comprising an envelope (2) of longitudinal axis (X) formed of a first (4) and of a second (6) shell, and defining an interior volume divided by a moving skirt into a low-pressure first chamber and a variable-pressure second chamber, a three-way valve (12) actuated by a control rod and placing the front chamber and the rear chamber in communication at rest and during a braking phase interrupting the communication between the front chamber and the rear chamber and supplying the rear chamber with pneumatic fluid at high pressure, said booster also comprising at least one means (46) for securing a master cylinder to said booster, advantageously two means for securing a master cylinder to said booster, **characterized in that** said means (46) allow the master cylinder to be attached to the booster by clip-fastening.

2. Booster according to Claim 1, **characterized in that** said means (46) comprise tabs (52) secured to a second sleeve tube (48) secured to the booster and running radially outward from said second sleeve tube (48).

3. Booster according to the preceding claim, **characterized in that** said tabs (52) are plastically deformable in the radial direction so as to enter a passage (54) made in a flange (56) of the master cylinder during the operation of attaching the master cylinder to the booster and so as to return to the initial position when the attachment operation is complete.

4. Booster according to Claim 2 or 3, **characterized in that** said tabs are regularly angularly distributed, advantageously being two in number, diametrically opposed.

5. Booster according to any one of Claims 2 to 4, **characterized in that** it comprises at least one second sleeve tube (48) secured to the first shell (4) of the envelope (2) of the booster.

6. Booster according to Claim 5, **characterized in that** the second sleeve tube is mounted securely on a spacer element (18) arranged between the first (4) and second (6) shells of the booster and of longitudinal axis parallel to the axis (X) of the booster.

7. Booster according to the preceding claim, **characterized in that** the spacer element (18) in which the second sleeve tube (48) is mounted via an orifice (14) made in the first shell (4) is of tubular shape.

8. Booster according to the preceding claim, **characterized in that** the spacer element (18) comprises annular elements (30, 32) at a first (20) and at a second (19) longitudinal end bearing against the interior faces (26, 28) of the first and second shells (4, 6).

9. Booster according to the preceding claim, **characterized in that** said annular elements (30, 32) are loose flanges attached to the first and second ends (20,19) of the spacer element (18).

10. Booster according to any one of the preceding claims, **characterized in that** the booster comprises a means (34) for angularly indexing the booster with respect to a bulkhead of a motor vehicle secured to the second shell (6) of the booster.

11. Booster according to the preceding claim, **characterized in that** the angular indexing means (34) are formed of a longitudinal end of a first sleeve tube (36) projecting from the second shell (6) toward the outside of the envelope (2) of the booster.

12. Booster according to the preceding claim in combination with any one of Claims 6 to 9, **characterized in that** the first sleeve tube (36) is secured to the spacer element (18).

13. Booster according to Claim 12, **characterized in that** the first and second sleeve tubes (36, 48) are force-fitted into the spacer element (18).

14. Booster according to the preceding claim, **characterized in that** the first (36) and second (48) sleeve tubes have longitudinal flutes (39,139) projecting from their exterior periphery and forcibly collaborating with the interior surface of the tubular spacer element (18).

15. Booster according to any one of Claims 11 to 14, **characterized in that** the first (36) and second (38) sleeve tubes are made of thermoplastic.

16. Booster according to any one of Claims 11 to 14, **characterized in that** the first and second sleeve tubes (36, 48) comprise means (38, 40, 138, 140) leaktightly isolating the inside of the booster from the external environment.

17. Booster according to the preceding claim in combination with Claim 15, **characterized in that** the sealing means (38, 40, 138, 140) are made of elastomeric thermoplastic.

18. Braking system comprising a master cylinder equipped with a flange (56) pierced with diametrically opposed passages (54) and with a pneumatic brake booster, **characterized in that** said booster is a booster according to any one of the preceding claims and **in that** the passages (54) made in the flange and collaborating with the means (46) for attachment by clip-fastening allow the master cylinder to be clip-fastened onto the booster.

19. Braking system according to the preceding claim, **characterized in that** it is secured to a bulkhead of a motor vehicle using tierods (17) mounted in the first and second sleeve tubes (36, 48) and the spacer element (18) so as to emerge on each side of the booster along the longitudinal axis (X).

20. System according to the preceding claim, **characterized in that** the tierod (17) comprises, at first and second longitudinal ends, a first and a second screw thread collaborating with a first and a second (62) nut, said first nut allowing the booster to be fixed to the bulkhead and the second nut stiffening the envelope (2) of the booster and reinforcing the attachment of the master cylinder to the booster.

21. System according to the preceding claim, **characterized in that** the second nut (62) comprises means (64) for breaking off the tabs (52) of the clip-fastening attachment means as the second nut (62) is screwed onto the tierod (17).

22. System according to Claim 21, **characterized in that** the breaking means (64) comprise at least one ramp (68) made on one face of the nut in contact with the flange of the master cylinder and orientated in such a way that the depth of said ramp (68) decreases as the second nut (62) is tightened.
